# EUROPÄISCHE PATENTANMELDUNG

(11) **EP 2 894 024 A1**
(43) Veröffentlichungstag der Anmeldung: **15.07.2015**
(21) Anmeldenummer: 15151202.7
(22) Anmeldetag: 14.01.2015
(51) Int. Cl.: B29C 65/20, E06B 3/96

(54) **Zweiteiliges Eckschweißverbinderelement und Fertigungsverfahren für die Herstellung von Fenster- und Türrahmen aus Kunststoffhohlprofilen**

(30) Priorität: 14.01.2014 DE 102014100360
(71) Anmelder: Veka AG, 48324 Sendenhorst (DE)
(72) Erfinder: Bechtold, Alexander, 48165 Münster (DE)
(74) Vertreter: Tarvenkorn, Oliver

(57) **Zusammenfassung**

Ein zweiteiliges Eckschweißverbinderelement für die Herstellung von Fenster- und Türrahmen aus Kunststoffhohlprofilen mit einem Einsatzelement (10) weist einen in eine Hohlkammer eines Kunststoffhohlprofiles einschiebbaren Einsatzkörper (11) mit einer Klemmkeilausnehmung (13) auf, die an ihrem einem Ende in einem mit einem Gehrungswinkel α schräg angestellten Schweißspiegelrahmen (12) mündet, der die Klemmkeilausnehmung (13) wenigstens teilweise umgibt, und mit einem Keilelement (20), das einen Klemmkörper (21) aufweist, welcher durch axiales Einschieben in den Einsatzkörper (11) in diesem verklemmbar ist, und das an einem Ende des Klemmkörpers (21) eine in einem Gehrungswinkel α schräg angestellte Schweißspiegelplatte (22) aufweist.

Die Schweißspiegelplatte (22) des Keilelements (20) und der Schweißspiegelrahmen (12) des Klemmelements (10) bilden eine in einer gemeinsamen Ebene liegende Schweißspiegelfläche. Der Schweißspiegelrahmen (12) besitzt wenigstens eine seitlich über den Einsatzkörper (11) überstehende Profilanschlagfläche (17).

Die Klemmkeilausnehmung (13) ist von dem Schweißspiegelrahmen (12) und ggf. einem umfänglichen geschlossenen Endbereich (18) des Einsatzkörpers umgeben und erstreckt sich jenseits des Schweißspiegelrahmens (12) bzw. des Endbereichs (18) als ein an gegenüberliegenden Außenseiten des Einsatzkörpers (11) offener Schlitz (15, 16), welcher den Einsatzkörper (11) in voneinander abspreizbare Segmente (11.1, 11.2, 11.3, 11.4) teilt.

## Beschreibung

Die Erfindung betrifft ein zweiteiliges Eckschweißverbinderelement für die Herstellung von Fenster- und Türrahmen aus Kunststoffhohlprofilen mit den Merkmalen des Oberbegriffs des Anspruchs 1.

Beim Verschweißen zweier auf Gehrung geschnittener Kunststoffhohlprofilabschnitte, insbesondere zum Bau von Fenster- und Türrahmen bzw. von Fenster- und Türflügeln, werden sogenannte Eckschweißverbinderelemente in die offen liegenden Enden der Kunststoffhohlprofilabschnitte eingesetzt. Beim Schweißprozess, der zur Verbindung der Kunststoffhohlprofile durchgeführt wird, werden dann nicht nur die gegeneinander gepressten Profilstege des Kunststoffhohlprofils, die sehr schmal sind, miteinander verbunden, sondern es werden im Bereich der Schnittfläche des Profils auch die wesentlich großflächigeren Eckschweißverbinderelemente miteinander verschweißt, sodass im Ergebnis ein aus zwei Eckschweißverbinderelementen bestehendes Winkelelement innerhalb der Hohlräume des Kunststoffhohlprofils geschaffen wird, welches die derartig ausgebildete Eckverbindung deutlich verstärkt. Um genau dies zu erreichen, ist es jedoch erforderlich, dass das Eckschweißverbinderelement mit seiner Stirnfläche sehr exakt in der jeweiligen Schnitt- und Schweißebene der Kunststoffhohlprofilabschnitte liegt. Liegt die Stirnfläche des Eckschweißverbinderelements nur leicht vertieft zu der Schweißebene des Kunststoffhohlprofils, so kann keine Verbindung des Eckschweißverbinderelements mit dem benachbarten Eckschweißverbinderelement hergestellt werden und die Verbindung erfolgt ausschließlich über die Profilstege. Ragt es andererseits über die Schweißebene hinaus, so werden nur die Eckschweißverbinderelemente, jedoch nicht die Profilkanten des Kunststoffhohlprofils dicht miteinander verbunden.

Die exakte Positionierung der bekannten Eckschweißverbinderelemente wird dadurch erschwert, dass die Eckschweißverbinderelemente in dem Profilabschnitt geklemmt werden müssen, nachdem sie eingesteckt und positioniert worden sind. Hierzu ist nach dem Stand der Technik ein leicht keilförmiger Klemmkörper vorgesehen, welcher von hinten, also von der der Schweißfläche abgewandten Seite her, in den Einsatzkörper des Einsatzelements eingesteckt wird. Dann wird die so vorbereitete Einheit in das Kunststoffhohlprofil eingesetzt. Von der Schnittebene her wird sodann der Klemmkörper von hinten tiefer in die Klemmkeilausnehmung hineingezogen, um die Verklemmung vorzunehmen. Durch die dazu erforderlichen hohen Kräfte besteht jedoch abermals die Gefahr, dass das Eckschweißverbinderelement aus seiner vorgesehenen Position gezogen wird. Die hohen Kräfte führen auch zur Ermüdung der Monteure. Zudem muss noch eine an der Schnittebene herausragende Zuglasche des Klemmelements vorgesehen werden, die anschließende abgetrennt werden muss, bevor die Schweißverbindung vorgenommen werden kann

Das in der DE 197 48 613 C1 beschriebene Eckschweißverbinderelement ist hingegen einfacher im Kunststoffhohlprofil positionierbar und darin leichter fixierbar, weil die Montage allein durch Ausüben von Druckkräften von der Gehrungsebene her erfolgt. Dabei ist vorgesehen, die Schweißspiegelfläche zweiteilig auszubilden, und zwar mit einem Schweißspiegelrahmen an dem Einsatzelement und einer Schweißspiegelfläche am Keilelement, welches von der Schweißebene her in das Einsatzelement eingesetzt wird und nicht mehr von hinten. Damit wird dem Bediener die Arbeit wesentlich erleichtert. Außerdem wird dadurch, dass beim Fügen der Profile zunächst nur die Schweißflächen gegeneinander drücken, gewährleistet, dass diese beim maschinellen Fügen selbsttätig exakt bis in die Schweißebene geschoben werden, aber andererseits auch nicht tiefer in das Profil hinein als gewünscht..

Nachteilig an dem bekannten Eckschweißverbinderelement ist allerdings die Art der Verklemmung gegenüber dem Fenster- oder Türprofil, denn diese erfolgt nur mittelbar über ein im Profil eingesetztes metallisches Verstärkungsprofil. Zur Verklemmung sind einzelne Keilelemente vorgesehen, die in Aussparungen des Einsatzkörpers ruhen und die zur Innenseite erheblich überwölbt sind, so dass starke Spreizkräfte entstehen, wenn das innere Keilelement eingesetzt wird. Diese können zum Bersten eines Kunststoffhohlprofils führen. Die Verklemmung erfolgt zudem in dem Metall-Verstärkungsprofil, aber nicht in dem eigentlichen Fenster- oder Türprofil. Somit müssen starke Spreizkräfte vorgesehen sein, um das metallische Verstärkungsprofil aufzubiegen und von innen gegen die Wandung des Fenster- oder Türprofils zu drücken oder das metallische Profil muss wiederum exakt innerhalb des Fensterprofils axial gesichert sein, damit es beim Fügen nicht verrutscht. Die starken Spreizkräfte erfordern zudem hohe Montagekräfte. Nachteilig ist auch, dass die Klemmelemente beim Einschieben des Einsatzkörpers lagerichtig darin platziert werden müssen.

Die Aufgabe der vorliegenden Erfindung besteht somit darin, ein Eckschweißverbinderelement der eingangs genannten Art so zu verbessern, dass die Montage mit weniger vorbereitenden Arbeiten und mit geringeren Kräften vorgenommen werden kann und dass das Eckschweißverbinderelement nicht nur in einem metallischen Verstärkungsprofil verklemmt werden kann, sondern auch direkt an der Innenwandung eines Tür- oder Fensterprofils aus Kunststoff.

Diese Aufgabe wird gemäß der vorliegenden Erfindung durch ein zweiteiliges Eckschweißverbinderelement mit den Merkmalen des Anspruchs 1 gelöst. Soweit bei der Beschreibung der vorliegenden Erfindung von "Schweißen" die Rede ist, wird damit nur ein bevorzugtes Verfahren zur stoffschlüssigen Verbindung der Kunststoffhohlprofilabschnitte und der darin eingesetzten Eckschweißverbinderelemente beschrieben. Auch das Verkleben der Schweißspiegel ist im Sinne der vorliegenden Erfindung mit eingeschlossen.

Außerdem schließt die Bezeichnung "Fenster- und Türrahmen" die an Fenster und Türen stets vorhandenen äußeren Blendrahmen wie auch die darin gelagerten Fenster- oder Türflügel ein.

Zu Grunde liegt weiterhin der Gedanke, die Schweißspiegelfläche zweiteilig auszubilden, und zwar mit einem Schweißspiegelrahmen an dem Einsatzelement und mit einer Schweißspiegelfläche am Keilelement, welches von der Schweißebene her in das Einsatzelement eingesetzt wird und nicht mehr von hinten. Damit wird dem Bediener die Arbeit wesentlich erleichtert. Außerdem wird dadurch, dass zunächst nur die Schweißflächen gegeneinander drücken, gewährleistet, dass diese beim maschinellen Fügen selbsttätig exakt bis in die Schweißebene geschoben werden, aber andererseits auch nicht tiefer in das Profil hinein als gewünscht. Es ist damit absolut gewährleistet, dass die Schweißflächen immer exakt in der Schweißebene und zugleich dicht voreinander liegen.

Die Schweißspiegelflächen sind überwiegend in das Keilelement verlagert. Aufgrund seiner starken Verklemmung in dem Eckschweißverbinderelement und der formschlüssigen Führung über das in seinem Ankerbereich wiederum vorzugsweise kreuzförmig ausgebildete Keilelement wird aber ein stabiler Eckverbinder aus nur zwei Elementen hergestellt.

Erfindungsgemäß wird erreicht, dass die Handhabung des Keils zum Fixieren erleichtert ist, weil eben der Keil bequem von der Schnittebene her eingesetzt werden kann. Außerdem besteht so die Möglichkeit, diesen Teil der Schweißspiegelfläche zunächst bewusst über die vorgesehene Fügeebene hinaus stehen zu lassen und zugleich die Möglichkeit zu geben, im Verlaufe des Montagevorgangs die Schweißspiegelfläche am Klemmkörper immer tiefer einzeldrücken, wodurch zum einen die Verklemmung mehr und mehr verstärkt wird und zum anderen die Schweißspiegelflächen an den beiden Kunststoffhohlprofilabschnitten automatisch sehr exakt in die vorgesehene Lage in der Schweißspiegelebene gedrückt werden, ohne dass der Benutzer eine umständliche Vorpositionierung vornehmen muss und die positionierten Teile manuell fixieren muss.

Erfindungsgemäß umfasst das Eckschweißverbinderelement nur zwei wesentliche Teile, nämlich das Einsatzelement, welches in seiner Außenkontur an eine Hohlkammer des zu verbindenden Kunststoffhohlprofils angepasst ist, und ein Keilelement, welches in eine Klemmkeilausnehmung im Einsatzkörper des Einsatzelements einschiebbar ist. Dadurch, dass die Klemmkeilausnehmung nur von dem Schweißspiegelrahmen und ggf. Endbereich des Einsatzkörpers am ganzen Umfang geschlossen ist umgeben ist und sich jenseits des Schweißspiegelrahmens bzw. des Endbereichs als an gegenüberliegenden Außenseiten des Einsatzkörpers offener Schlitz bis an das rückwärtige Ende des Einsatzkörpers erstreckt, wird der Einsatzkörper in wenigstens zwei voneinander abspreizbare Segmente geteilt. Hierdurch spreizt der Einsatzkörper selbst auf und bewirkt eine kraftschlüssige Klemmung des Eckschweißverbinderelements im Kunststoffhohlprofil. Auf separate Klemmkeilelemente kann verzichtet werden.

Die Klemmung wird dadurch erreicht, dass der schlitzförmige Anteil der Klemmkeilausnehmung und der darin einschiebbare Klemmkörper mit einander einen sich in Einschubrichtung verjüngenden Spalt ausbilden. Damit gibt es nur einen sehr kleinen Keilwinkel und entsprechend steigen die Klemmkräfte beim Fügen sehr gleichmäßig an, je mehr das Klemmelement eingeschoben wird.

Vorzugsweise ist zwischen der Klemmkeilausnehmung und dem Schweißspiegelrahmen wenigstens eine Anschlagfläche vorgesehen, welche um zumindest die Plattenstärke der Schweißspiegelplatte gegenüber der Außenseite des Schweißspiegelrahmens vertieft angeordnet ist. Damit ist sichergestellt, dass das Klemmelement nicht zu weit eingeschoben wird. Es wird dadurch zum einen exakt gegenüber dem Schweißspiegelrahmen positioniert und zum anderen wird der für die Klemmung durch Spreizung der Segmente zur Verfügung stehende Weg begrenzt, wodurch wieder die auf die Profilwandung wirkenden Klemmkräfte begrenzbar sind.

Anhand der nachfolgend beschriebenen, bevorzugten Ausführungsform eines erfindungsgemäßen Eckschweißverbinderelements wird zugleich ein Fertigungsverfahrens für die Herstellung von Fenster-und Türrahmen bzw. - flügeln aus Kunststoffhohlprofilen näher beschrieben. Die Figuren zeigen dabei im Einzelnen:
- Fig. 1: ein Einsatzelement eines erfindungsgemäßen Eckschweißverbinderelements, in perspektivischer Darstellung;
- Fig. 2: ein Keilelement eines erfindungsgemäßen Eckschweißverbinderelements, in perspektivischer Darstellung;
- Fig. 3: ein Eckschweißverbinderelement mit teilweise in das Einsatzelement eingeschobenem Keilelement, in seitlicher Ansicht; und
- Fig. 4, 5: zwei auf Gehrung geschnittene Kunststoffhohlprofile mit eingesetzten Eckschweißverbinderelementen in schematischer seitlicher Ansicht vor dem Fügen und in seitlicher Ansicht nach dem Fügen.

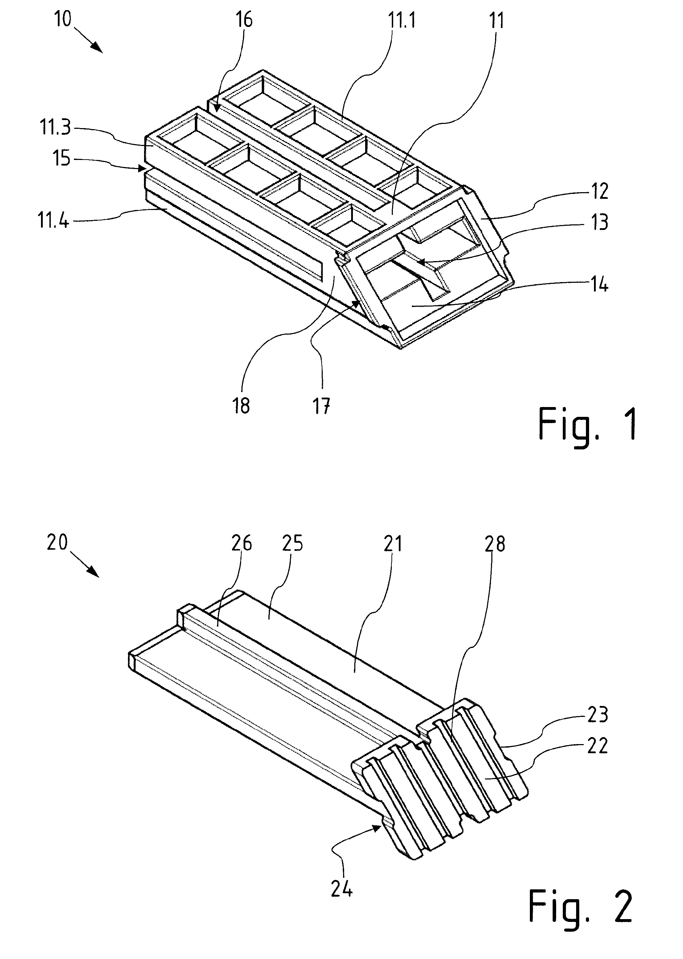

Figur 1 zeigt ein Einsatzelement 10 in perspektivischer Ansicht. Es besitzt einen Einsatzkörper 11, an dessen einem Ende ein Schweißspiegelrahmen 12 ausgebildet ist, der entsprechend dem vorgesehenen Gehrungswinkel, insbesondere von α = 45°, gegenüber einer Längsachse des Einsatzkörpers 11 geneigt ist. Von dem Schweißspiegelrahmen 12 ausgehend erstreckt sich eine Klemmkeilausnehmung 13 der Länge nach durch das Einsatzelement 10. Dabei ist sie vorne von dem Schweißspiegelrahmen 12 und einem am Außenumfang geschlossenen Endbereich 18 des Einsatzkörpers 11 umgeben und öffnet sich dahinter bis an die Außenseiten zu Schlitzen 15, 16. Diese offenen Schlitze im Einsatzkörper 11 verlaufen durchgängig bis zum hinteren Ende des Einsatzkörpers 11.

Durch einen Querschlitz 15 und je einen senkrecht dazu angeordneten Nebenschlitz 16 an der Ober- und der Unterseite ergibt sich im Querschnitt eine Kreuzform der Klemmkeilausnehmung 13. Hierdurch ist der hintere Teil des Einsatzkörpers im Ankerbereich in vier Segmente 11.1, 11.2, 11.3 und 11.4 geteilt.

Innerhalb des Schweißspiegelrahmens 12, direkt an die Klemmkeilausnehmung 13 anschließend, sind Anschlagflächen 14 ausgebildet, die in demselben Winkel α schräg ausgerichtet sind wie auch die Außenseite des Schweißspiegelrahmens 12. Die Anschlagflächen 14 liegen gegenüber der Außenseite des Schweißspiegelrahmens 12 etwas vertieft, damit sie die Plattenstärke einer Schweißspiegelplatte 22 aufnehmen können.

Figur 2 zeigt ein Keilelement 20, das einen Klemmkörper 21 und eine sich einseitig daran anschließende Schweißspiegelplatte 22 umfasst. Diese hat an ihren Außenrändern einige Einbuchtungen 23, die dazu dienen, die Klinge eines Schraubendrehers als Hebel anzusetzen, wenn die Schweißspiegelfläche 22 innerhalb des Schweißspiegelrahmens 12 liegt, so dass die Außenseite der Schweißspiegelfläche 22 und des Schweißspiegelrahmens 12 eine bündige Oberfläche bilden. Damit können das Klemmkeilelement 20 und das Einsatzelement 10 noch einmal voneinander getrennt werden.

Rillen 28 können an der Außenseite der Schweißspiegelplatte 22 vorgesehen sein, um überflüssiges Schweißgut oder Klebstoffreste aufzunehmen oder um Wärmespannungen auszugleichen.

Der Klemmkörper 21 besitzt eine breite Querrippe 25, auf der mittig jeweils nach unten und nach oben weisend Verstärkungsrippen 26 angeordnet sind. Der Querschnitt 21 des Klemmkörpers 21 ist somit ebenfalls kreuzförmig und stimmt mit dem Querschnitt der Klemmkeilausnehmung 13 im Einsatzelement 10 überein.

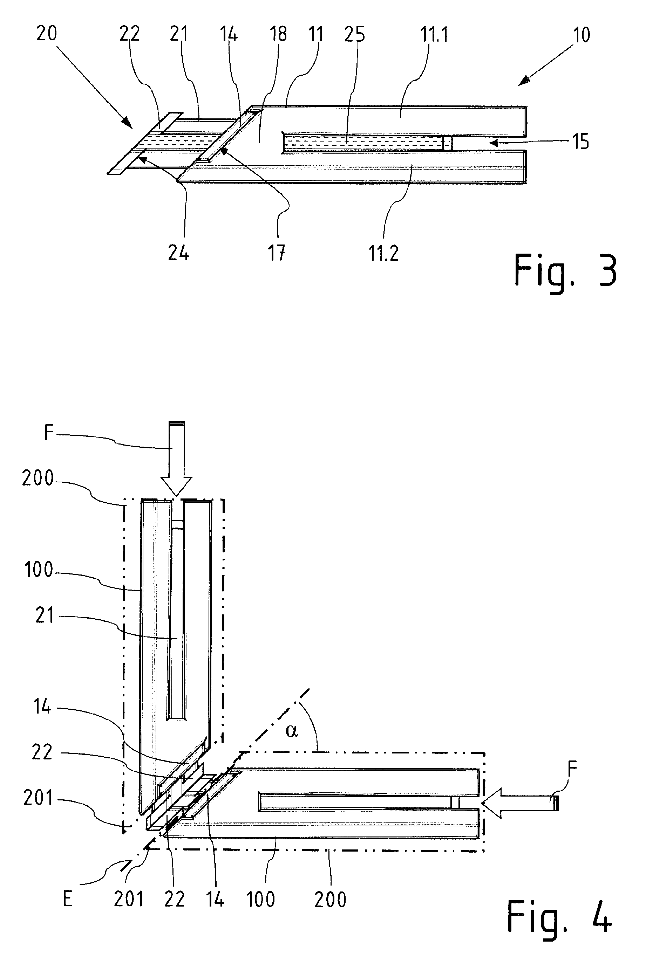

Figur 3 zeigt das Einsatzelement 10 mit dem eingesetzten Keilelement 20, entsprechend der Lage bei einer ungenauen manuellen Vorfixierung vor der Montage. Das Keilelement 20 ragt mit seiner Schweißspiegelplatte 22 ein Stück aus dem Einsatzelement 10 heraus. Die Schweißspiegelplatte 22 liegt hier noch nicht an der Anschlagfläche 14 im Einsatzelement 10 an.

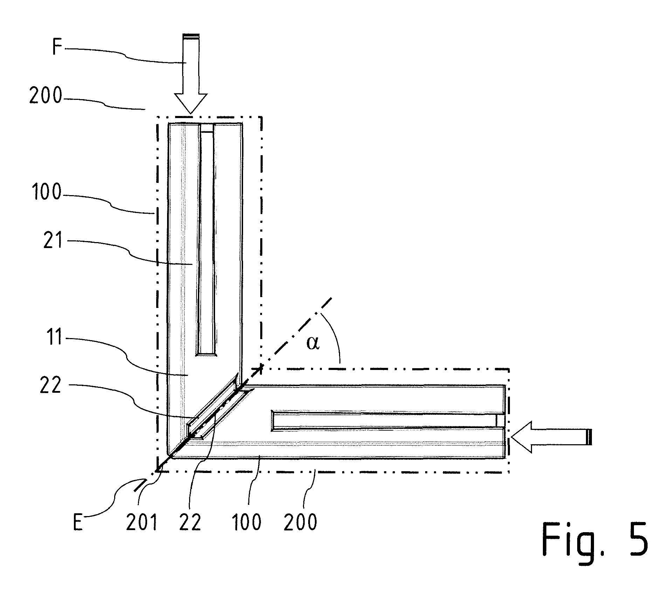

Die Figuren 4 und 5 zeigen schematisch die Montage zweier Kunststoffhohlprofilabschnitte 200 unter Verwendung erfindungsgemäßer Eckschweißverbinderelemente 100.

Zunächst werden zwei Kunststoffhohlprofilabschnitte 200 vorbereitet, indem sie jeweils an zumindest einem Ende mit einem Gehrungswinkel α geschnitten werden, wobei die Schnittfläche gegenüber der Längsachse des Kunststoffhohlprofils 200 um die Hälfte desjenigen Winkels geneigt ist, welcher bei den fertig gefügten Profilabschnitten eingeschlossen werden soll. Da meist rechtwinklige Eckverbindungen geschaffen werden sollen, beträgt der Gehrungswinkel normalerweise 45°, und entsprechend ist die Schweißspiegelebene E um α = 45° gegenüber der Längsachse des Kunststoffhohlprofilabschnitts 200 geneigt ausgerichtet.

Außerdem wird die Schnittfläche am Kunststoffhohlprofil 200 noch eingefräst, um insbesondere eine Vertiefung zur Aufnahme des Schweißspiegelrahmens 12 des Einsatzelements 10 zu schaffen.

In die offenen Enden der so vorbereiteten Kunststoffhohlprofile 200 wird jeweils ein Einsatzelement 10 gemäß der vorliegenden Erfindung eingesetzt. Es besitzt an der von der Schweißspiegelebene E abgewandten Rückseite eines seitlichen Vorsprungs wenigstens eine Anschlagfläche 17 (vgl. Fig. 3). Durch die Anschlagfläche 17 wird verhindert, dass das Einsatzelement 10 bei den nachfolgenden Schritten tiefer als gewünscht in das Kunststoffhohlprofil 200 hineinrutscht.

Danach wird ein Keilelement 20 mit seinem Klemmkörper 21 in eine Klemmkeilausnehmung 13 des Einsatzelements 10 eingesetzt, und zwar wird gemäß der vorliegenden Erfindung das Keilelement 20 von vorne, also von der Schnitt- und Fügeebene E her, in das Einsatzelement 10 eingeschoben.

Das Keilelement 20 kann dann noch leicht von Hand eingedrückt werden, um den Einsatzkörper 11 etwas aufzuspreizen und eine Vorfixierung des zweiteiligen Eckschweißverbinderelements 100 innerhalb des Ende des Kunststoffhohlprofils 200 zu bewirken.

Ein Vorteil der Erfindung ist, dass manuell eben lediglich eine gewisse Vorfixierung vorgenommen zu werden braucht, um zu verhindern, dass das Eckschweißverbinderelement 100 aus dem Profil 200 herausrutscht. In die andere Richtung wird ein zu tiefes Hineinrutschen des Eckschweißverbinderelements in das Profil hinein formschlüssig verhindert, und zwar dadurch, dass das Einsatzelement die wenigstens eine seitlich über den Einsatzkörper 11 überstehende Anschlagfläche 17 aufweist.

Die Schweißspiegelplatte 22 des Keilelements 20 steht zu diesem Zeitpunkt noch etwas oberhalb der Schnittfläche des Kunststoffhohlprofils und der dort vorgesehenen Fügeebene E.

Diese Vormontage wird bei beiden Kunststoffhohlprofilabschnitten 200 durchgeführt, welche anschließend in einen Montageautomaten eingesetzt werden. Dieser führt die Kunststoffhohlprofilabschnitte 200 mit ihren Schnittflächen lagerichtig aufeinander zu, entsprechend der Positionierung in Figur 4.

Die eigentliche Verklemmung wird dann automatisch vor / während des Schweißprozesses bewirkt, wenn die Schweißautomaten die miteinander zu verbindenden Profilteile 200 aneinanderdrücken. Durch die maschinelle Kraft F, die durch die Blockpfeile angedeutet ist, werden an den benachbarten Kunststoffhohlprofilabschnitten'200 die Schweißspiegelplatten 22 der Klemmelemente 20 zunächst aneinander angepresst, und werden dann zunehmend in das jeweilige Einsatzelement 10 hinein gedrückt, bis sie bündig aneinander liegen. Ein unbeabsichtigtes zu tiefes Einschieben der Schweißspiegelfläche 22 ist nicht möglich, da diese maximal soweit eingeschoben werden können, bis die rückseitigen Anschlagflächen 24 der Schweißspiegelfläche 22 an den Anschlagflächen 14 innerhalb des Schweißspiegelrahmens 12 liegen. An diesem Punkt, der in Figur 5 dargestellt ist, wird ein weiteres Verschieben des Keilelements 20 gegenüber dem Einsatzelement 10 durch Formschluss verhindert.

Es ist aber nicht erforderlich, dass die Schweißspiegelplatte 22 exakt an der Anschlagfläche 14 anliegt. Vielmehr sollte gerade vorgesehen sein, die Anschlagfläche 14 um bestimmte Toleranzen tiefer im Profil anzuordnen, als es die Nennmaße erfordern, so dass auf jeden Fall gewährleist ist, dass die Außenseite der Schweißspiegelplatte 22 exakt bündig mit den Profilkanten am Gehrungsschnitt liegt, auch wenn die Schweißspiegelplatte 22 etwas oberhalb der Anschlagfläche 24 positioniert sein sollte. Jedoch ist die Verklemmung im Einsatzelement 10 auf jeden Fall stark genug, um die Keilelemente 20 während des Schweißens zu halten, und nach dem Fügen ist durch die beiden verbundenen Keilelemente 20 innerhalb der Kunststoffhohlprofile 200 ein starres Winkelelement ausgebildet, das sich mit seinen beiden Schenkeln automatisch formschlüssig fixiert.

Die Eckschweißverbinderelemente 100 sind nun so exakt und zugleich so fest in den Kunststoffhohlprofilabschnitten 200 fixiert, das mittels des Montageautomaten die beiden Kunststoffhohlprofilabschnitte 200 auch noch einmal aus der Figur 5 gezeigten Lage wieder auseinandergezogen werden können, ohne dass sich an den Eckschweißverbinderelementen 100 noch irgendetwas ändert. Damit können die Fügeflächen noch einmal offen gelegt werden, um sie zu reinigen oder vorzubehandeln oder um einen Klebstoff aufzutragen. Möglich ist auch, die offen liegenden Fügeflächen zu erwärmen, um dann die leicht angeschmolzenen oder mit Klebstoff versehenen Flächen am Schweißspiegel gegeneinander zu pressen und darüber eine stoffschlüssige Verbindung zu erreichen.

Bleiben die Kunststoffhohlprofilabschnitte 200 in der Position gemäß Figur 5, können Sie beispielsweise auch direkt durch Ultraschallschweißen verbunden werden.

Es kann vorgesehen sein, die Schlitze 15, 16 im Einsatzelement 10 konisch zulaufen zu lassen und die Rippen 24, 25 an dem Keilelement 20 parallel, mit einem über die Länge konstantem Querschnitt, auszubilden, oder auch umgekehrt. Mit dem Einschieben des Klemmkörpers 21 werden in jedem Fall die einzelnen Segmente des Einsatzkörpers 11 abgespreizt und gegen die Profilwandungen des Kunststoffhohlprofils 200 gedrückt.

Vorgesehen sein kann auch, dass nicht nur die innen liegenden Quer- und Nebenschlitze 15, 16 im Einsatzkörper 11, welche dessen Segmente voneinander trennen, konisch zulaufend sind, sondern dass der gesamte hintere Einsatzkörper 11 mit seinen einzelnen Segmenten 11.1, 11.2, 11.3, 11.4 an seiner Außenkontur leicht konisch über die Länge ausgebildet ist. Damit kann eine Vorfixierung einfach dadurch erreicht werden, dass das Eckschweißverbinderelement 10 ein Keil ist, der in die offene Profilkammer hineingeschoben wird. Auch ohne Positionierung des Keilelements 20 wird so bereits eine Sicherung vor Verrutschen und Herausfallen bei der weiteren Handhabung bewirkt.

### Bezugszeichenliste:

- **100**: **Eckschweißverbinderelement**

- 10: Einsatzelement
- 11: Einsatzkörper
- 12: Schweißspiegelrahmen
- 13: Klemmkeilausnehmung
- 14: Anschlagfläche
- 15: Querschlitz
- 16: Nebenschlitz
- 17: Profilanschlagfläche
- 18: Endbereich des Einsatzkörpers

- 20: Keilelement
- 21: Klemmkörper
- 22: Schweißspiegelplatte
- 23: Einbuchtung
- 25: Querrippe
- 26: Verstärkungsrippe

- **200**: **Kunststoffhohlprofil**

- **E**: **Schweißspiegelebene**

- **F**: **Fügekraft**

## Patentansprüche

1. Zweiteiliges Eckschweißverbinderelement (100) für die Herstellung von Fenster-und Türrahmen aus Kunststoffhohlprofilen (200),
mit einem Einsatzelement (10), das einen in eine Hohlkammer eines Kunststoffhohlprofiles (200) einschiebbaren Einsatzkörper (11) umfasst, welcher wenigstens eine sich in Längsrichtung durchgängig erstreckende Klemmkeilausnehmung (13) aufweist, die an ihrem einem Ende in einem Schweißspiegelrahmen (12) mündet, der mit einem Gehrungswinkel α schräg angestellt ist und der die Klemmkeilausnehmung (13) wenigstens teilweise umgibt;
und mit einem Keilelement (20), das einen Klemmkörper (21) aufweist, welcher durch axiales Einschieben in den Einsatzkörper (11) in diesem verklemmbar ist, und das an einem Ende des Klemmkörpers (21) eine in einem Gehrungswinkel α schräg angestellte Schweißspiegelplatte (22) aufweist,
wobei die Schweißspiegelplatte (22) des Keilelements (20) und der Schweißspiegelrahmen (12) des Klemmelements (10) eine in einer gemeinsamen Ebene liegende Schweißspiegelfläche bilden
und wobei der Schweißspiegelrahmen (12) wenigstens eine seitlich über den Einsatzkörper (11) überstehende Profilanschlagfläche (17) aufweist,
**dadurch gekennzeichnet, dass** die Klemmkeilausnehmung (16) von dem Schweißspiegelrahmen (12) und ggf. einem umfänglichen geschlossenen Endbereich (18) des Einsatzkörpers (11) umgeben ist und sich jenseits des Schweißspiegelrahmens (12) bzw. des Endbereichs als an gegenüberliegenden Außenseiten des Einsatzkörpers (11) offener Schlitz (15, 16) bis an das rückwärtige Ende des Einsatzkörpers (11) erstreckt und den Einsatzkörper (11) in voneinander abspreizbare Segmente (11.1, 11.2, 11.3, 11.4) teilt.

2. Eckschweißverbinderelement (100) nach Anspruch 1, **dadurch gekennzeichnet**, **dadurch gekennzeichnet, dass** zwischen der Klemmkeilausnehmung (13) und dem Schweißspiegelrahmen (12) wenigstens eine Anschlagfläche (14) vorgesehen ist, welche um zumindest die Plattenstärke der Schweißspiegelplatte (22) gegenüber der Außenseite des Schweißspiegelrahmens (12) vertieft angeordnet ist.

3. Eckschweißverbinderelement (100) nach Anspruch 1 oder 2, **dadurch gekennzeichnet,**
- **dass** die Klemmkeilausnehmung (13) des Schweißspiegelrahmens (12) bzw. des Endbereichs des Einsatzelements (10) mit einem breiten Querschlitz (15) und wenigstens einem sich senkrecht dazu erstreckenden Nebenschlitz (16) T-förmig oder kreuzförmig ausgebildet ist
- und **dass** der Klemmkörper (21) des Keilelements (20) im Querschnitt T-förming oder kreuzförmig mit einer breiten Querrippe (25) und wenigstens einer senkrecht dazu angeordneten Verstärkungsrippe (26) ausgebildet ist.

4. Eckschweißverbinderelement (100) nach wenigstens einem der Ansprüche 1 bis 3, **dadurch gekennzeichnet, dass** die Schlitze (15, 16) im Einsatzelement (10) in Einschubrichtung konisch zulaufen und dass der Klemmkörper (21) und/oder die Rippen (24, 25) am Keilelement (20) mit einem über die Länge konstantem Querschnitt ausgebildet sind.

5. Eckschweißverbinderelement (100) nach wenigstens einem der Ansprüche 1 bis 3, **dadurch gekennzeichnet, dass** die Schlitze (15, 16) im Einsatzelement (10) mit einem über die Länge konstantem Querschnitt ausgebildet sind und dass der Klemmkörper (21) und/oder die Rippen (24, 25) an dem Keilelement (20) in Einschubrichtung konisch zulaufend sind.

6. Eckschweißverbinderelement (100) nach wenigstens einem der Ansprüche 1 bis 5, dass die Außenkontur des Einsatzkörpers (11) mit seinen durch die Schlitze (15, 16) getrennten Segmenten (11.1, 11.2, 11.3, 11.4) sich in Einschubrichtung konisch verjüngt.

7. Eckschweißverbinderelement (100) nach wenigstens einem der vorhergehenden Ansprüche, **dadurch gekennzeichnet, dass** die Schweißspiegelplatte (22) randseitig wenigstens eine Einbuchtung (23) aufweist.

8. Eckschweißverbinderelement (100) nach wenigstens einem der vorhergehenden Ansprüche, **dadurch gekennzeichnet, dass** die Schweißspiegelplatte (22) wenigstens eine Rille (28) aufweist.
